# FASCICULE DE BREVET EUROPEEN

(11) **EP 2 198 333 B1**
(45) Date de publication et mention de la délivrance du brevet: **10.07.2013**
(21) Numéro de dépôt: 08835090.5
(22) Date de dépôt: 01.10.2008
(51) Int. Cl.: G02B 6/30, G02B 6/126, G02B 6/34, G02B 6/124, H04B 10/61

(54) **DISPOSITIF OPTIQUE A CIRCUITS PHOTONIQUES SUPERPOSES, POUR COUPLAGE AVEC UN OU PLUSIEURS GUIDES OPTIQUES**
OPTISCHE ANORDNUNG MIT ÜBERLAGERTEN PHOTONISCHEN SCHALTUNGEN ZUR KOPPLUNG MIT EINEM ODER MEHREREN LICHTLEITERN
OPTICAL DEVICE WITH SUPERIMPOSED PHOTONIC CIRCUITS FOR COUPLING TO ONE OR MORE OPTICAL GUIDES

(30) Priorité: 03.10.2007 FR 0758043
(43) Date de publication de la demande: 23.06.2010
(73) Titulaire: Commissariat à l'Énergie Atomique et aux Énergies Alternatives, 75015 Paris (FR); Institut National Des Sciences Appliquees, 69621 Villeurbanne Cedex (FR)
(72) Inventeur: KOPP, Christophe, F-38120 Fontanil-cornillon (FR); FEDELI, Jean-Marc, 38120 Saint Egreve (FR); OROBTCHOUK, Régis, F-38490 Fitilieu (FR)
(74) Mandataire: Ilgart, Jean-Christophe
(86) Numéro de dépôt international: PCT/EP2008/063163
(87) Numéro de publication internationale: WO 2009/043880

(56) Documents cités:
- US-A- 5 276 745
- US-A- 6 166 372
- US-A1- 2002 126 942
- US-A1- 2004 114 642
- US-A1- 2004 184 156
- US-B1- 6 639 887
- CHEE-WEI LEE ET AL: "Vertical coupler architecture for polarization-independent coupling and polarization-selective coupling" PROCEEDINGS OF THE SPIE, vol. 5644, 17 janvier 2005 (2005-01-17), pages 459-464, XP002488406 USA
- WIM BOGAERTS ET AL: "Silicon-on -insulator nanophotonics" PROCEEDINGS OF THE SPIE, vol. 5956, no. 1, 16 septembre 2005 (2005-09-16), pages 1-15, XP002488407 USA cité dans la demande

## Description

### DOMAINE TECHNIQUE

La présente invention concerne un dispositif optique comprenant un circuit photonique intégré, destiné à être couplé à un ou plusieurs guides optiques (en anglais, *optical waveguides*), en particulier une ou plusieurs fibres optiques.

Elle s'applique notamment aux télécommunications optiques et, plus particulièrement, aux réseaux (en anglais, *networks)* de transmission de données.

De plus, bien que la présente invention s'applique à tout circuit photonique, ou circuit optique, elle s'applique tout particulièrement aux circuits nanophotoniques. On rappelle que les sections transversales des guides optiques de ces derniers ont des dimensions qui ne dépassent pas 1 µm.

Les technologies qui mettent en oeuvre des guides optiques planaires permettent d'intégrer de façon compacte, sur une même puce (en anglais, *chip*), des fonctions complexes de gestion de faisceaux lumineux comme par exemple le multiplexage, le démultiplexage, la modulation et le routage spectral.

Toutes ces fonctions sont nécessaires aussi bien pour des liaisons optiques à très courte distance, de l'ordre de 1 mm (par exemple les liaisons intra-puce), que pour des liaisons optiques à très longue distance, de l'ordre de plusieurs kilomètres (par exemple les réseaux métropolitains), pour apporter une solution à l'augmentation du débit des bus d'interconnexion.

L'intégration de davantage de fonctions optiques sur une même puce nécessite une miniaturisation poussée du circuit optique que comporte cette puce, ce qui conduit à miniaturiser la section transversale des guides optiques planaires jusqu'à des dimensions submicroniques.

Or, pour les applications relatives à de moyennes et de longues distances, c'est-à-dire des distances allant de quelques mètres à plusieurs kilomètres, le milieu (en anglais, *medium*) de transport optique privilégié est la fibre optique dont les dimensions de la section transversale vont de 10 µm à quelques dizaines de micromètres.

Par conséquent, les systèmes de couplage optique entre les guides optiques planaires et les fibres optiques doivent compenser cette croissante désadaptation dimensionnelle ainsi qu'un comportement différent vis-à-vis de la polarisation de la lumière.

Un circuit nanophotonique est naturellement très sensible à la polarisation. Pour la réception, cette sensibilité est incompatible avec une connexion directe du circuit à un réseau de fibres optiques dans lesquelles l'état de polarisation est à la fois inconnu et instable. Par conséquent, pour la réception, on a besoin de séparer les deux états fondamentaux de polarisation TE et TM et de traiter ceux-ci séparément sur le circuit.

On rappelle que, par convention, sur un circuit optique formé dans un plan donné, on définit ces états TE et TM tels que TE corresponde à un champ électrique transverse, parallèle au plan du circuit, et que TM corresponde à un champ magnétique transverse, perpendiculaire au plan du circuit.

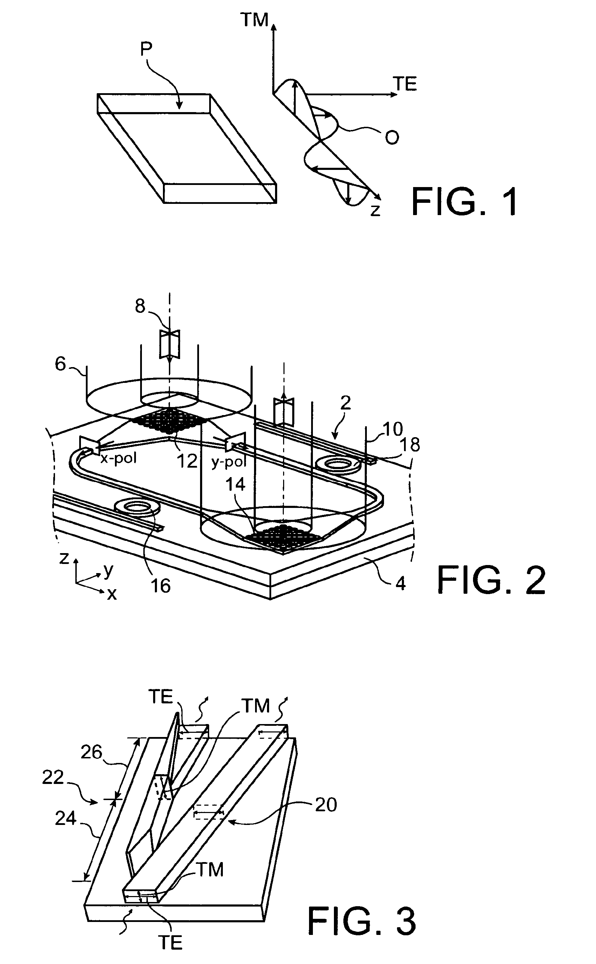

Ceci est schématiquement illustré sur la figure 1 où l'on voit le plan P d'un circuit optique et une onde électromagnétique O qui se déplace suivant une direction z parallèle au plan P. Cette onde électromagnétique a deux composantes, à savoir un champ électrique, qui est compté parallèlement au plan P et noté TE, et un champ magnétique qui est compté perpendiculairement au plan P et noté TM. La polarisation de l'onde est identique au champ électrique et, dans le cas représenté, elle est horizontale.

De manière générale, ces états de polarisation ou modes de polarisation TE et TM, qui sont orthogonaux, peuvent aussi être notés « x-pol » et « y-pol ».

### ÉTAT DE LA TECHNIQUE ANTÉRIEURE

Une structure, qui est compatible avec le besoin mentionné plus haut de séparer les deux états TE et TM, est connue par les documents suivants, auxquels on se reportera :
[1] US 7,065,272
[2] US 7,068,887
[3] Article de Wim Bogaerts et al., « Silicon-on-insulator nanophotonics, IMEC, Département de Technologie de l'Information, Université de Gent, Belgique, 2005.

Elle utilise un réseau (en anglais, *grating*) de diffraction à deux dimensions. Tout se passe comme si un tel réseau comprenait deux réseaux de diffraction à une dimension, à 90° l'un de l'autre. Ainsi, la composante TM d'un faisceau lumineux par rapport au premier réseau est couplée comme composante TE par rapport au second réseau.

Ceci est schématiquement illustré sur la figure 2. Cette dernière correspond à la figure 13(a) du document [3], à laquelle on se reportera. On y voit un circuit nanophotonique 2, qui est formé par un substrat 4, ainsi que trois axes x, y et z. Les axes x et y sont perpendiculaires au plan du circuit 2 et perpendiculaires l'un à l'autre tandis que l'axe z est perpendiculaire au plan du circuit.

Une fibre optique monomode (en anglais, *singlemode*) 6 transporte une lumière 8 que l'on couple au circuit et que l'on traite dans ce dernier. Une autre fibre optique monomode 10 récupère la lumière ainsi traitée.

En fait, cette figure montre un schéma de diversité de polarisation et, pour mettre en oeuvre ce dernier, on utilise un coupleur à réseau à deux dimensions 12 ou coupleur à réseau 2-D (en anglais, *2*-*D grating coupler*) en tant que séparateur de polarisation (en anglais, *polarization splitter*), à l'entrée du circuit 2, et un coupleur identique 14 à la sortie de ce dernier.

Ainsi, comme on le voit, les deux états de polarisation présents dans la fibre 6 sont séparés et chacun d'eux est traité dans son propre circuit 16 ou 18. Dans l'exemple, les circuits 16 et 18 sont des résonateurs en anneaux circulaires (en anglais, *circular ring resonators*). Bien entendu, les deux circuits 16 et 18 doivent être identiques ou quasi-identiques. A la sortie, ces deux circuits 16 et 18 sont « fusionnés » au moyen du coupleur 14.

Il résulte de tout cela que le circuit nanophotonique 2 ne traite que des polarisations TE, qui sont favorables aux meilleures performances. On a d'ailleurs montré qu'un circuit utilisant cette solution était globalement insensible à la polarisation du faisceau. En revanche, les pertes d'insertion de ce type de structure de couplage, qui ont été publiées jusqu'à présent, ne sont pas inférieures à 6 dB.

Une autre structure, qui est compatible avec la solution énoncée précédemment, est connue par le document suivant auquel on se reportera :
[4] Article de Timon Barwicz et al., « Polarization-transparent microphotonic devices in the strong confinement limit », Nature photonics, vol. 1, Janvier 2007, pp. 57-60.

Cette autre structure (figure 3) comporte une partie de couplage 20, qui est peu sensible à la polarisation, et une seconde partie 22 qui sépare les états TE et TM (dans la zone 24) tout en convertissant l'état TM en TE (dans la zone 26).

Cette solution connue par le document [4] nécessite une technologie de très forte résolution pour réaliser la seconde partie 22.

L'insensibilité globale en polarisation d'un circuit utilisant cette solution a été démontrée. En révanche, les performances = incluant les pertes d'insertion de la structure de couplage semblent faibles.

Ainsi, les solutions connues, que l'on vient de décrire, présentent l'inconvénient d'avoir des performances plutôt faibles, avec de fortes pertes d'insertion qui sont vraisemblablement au moins égales à 6dB. De plus, la gestion des deux états de polarisation incidents dans deux circuits quasi-identiques, dans un même plan (figure 2), augmente l'encombrement du circuit optique et réduit les possibilités de développement de circuits complexes.

### EXPOSÉ DE L'INVENTION

La présente invention a pour but de remédier aux inconvénients précédents.

L'article de Chee-Wei Lee et al., proc. of the SPIE, vol. 5644, 17 janvier 2005, pages 459 à 464, décrit une architecture de coupleur vertical pour un couplage indépendant de la polarisation et un couplage sélectif en polarisation.

De façon précise, la présente invention a pour objet un dispositif optique conformément à la revendication 1.

De préférence, le deuxième circuit photonique intégré élémentaire est compris entre le substrat et le premier circuit photonique intégré élémentaire, le premier circuit photonique intégré élémentaire étant destiné à recevoir le signal lumineux et adapté pour se coupler à un premier état de polarisation du signal lumineux, le deuxième circuit photonique intégré élémentaire étant adapté pour se coupler à un deuxième état de polarisation du signal lumineux.

De préférence, les premier et deuxième circuits photoniques intégrés élémentaires sont des circuits nanophotoniques.

Selon un mode de réalisation préfère, le dispositif, objet de l'invention est conforme à la revendication 4.

De préférence, le deuxième circuit photonique intégré élémentaire est compris entre le substrat et le premier circuit photonique intégré élémentaire, le premier circuit photonique intégré élémentaire étant destiné à recevoir le signal lumineux et adapté pour se coupler à un premier état de polarisation du signal lumineux, le deuxième circuit photonique intégré élémentaire étant adapté pour se coupler à un deuxième état de polarisation du signal lumineux, la partie de couplage du premier circuit photonique intégré élémentaire est adaptée pour se coupler au premier état de polarisation du signal lumineux, et la partie de couplage du deuxième circuit photonique intégré élémentaire est adaptée pour se coupler au deuxième état de polarisation du signal lumineux.

De préférence, chaque partie de couplage comprend un réseau de diffraction à une dimension.

Selon un premier mode de réalisation particulier de l'invention, chacun des réseaux de diffraction à une dimension comporte des lignes parallèles et les lignes de l'un des réseaux de diffraction à une dimension sont parallèles aux lignes de l'autre réseau de diffraction à une dimension.

Selon un deuxième mode de réalisation particulier, chacun des réseaux de diffraction à une dimension comporte des lignes parallèles et les lignes de l'un des réseaux de diffraction à une dimension sont perpendiculaires aux lignes de l'autre réseau de diffraction à une dimension.

En variante, chaque partie de couplage comprend un réseau de diffraction choisi parmi les réseaux à motifs courbes, les réseaux à pas variable d'un motif à l'autre, les réseaux photoniques et les optiques diffractives.

Le dispositif optique, objet de l'invention, peut comprendre en outre une structure réfléchissant la lumière, placée en dessous de l'ensemble des parties de couplage superposées.

Le dispositif optique, objet de l'invention, peut aussi comprendre un photodétecteur adapté pour détecter les états de polarisation qui sont traités par les premier et deuxième circuits photoniques intégrés élémentaires.

### BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés, sur lesquels :
- la figure 1 illustre schématiquement deux états fondamentaux de polarisation et a déjà été décrite,
- la figure 2 illustre schématiquement un schéma de diversité de polarisation utilisant des coupleurs à réseau 2-D et a déjà été décrite,
- la figure 3 illustre schématiquement une structure séparant les polarisations TE et TM, avec conversion de TM en TE, et a déjà été décrite,
- la figure 4 illustre schématiquement des coupleurs à réseau servant respectivement à coupler la lumière issue d'une fibre dans une structure à guide nanophotonique et à la renvoyer dans une autre fibre,
- la figure 5 est une vue en coupe schématique d'un mode de réalisation particulier du dispositif optique, objet de l'invention,
- la figure 6 est une vue en coupe schématique d'un autre mode de réalisation particulier de l'invention,
- la figure 7 est une vue en perspective schématique et partielle d'un autre mode de réalisation particulier de l'invention,
- la figure 8 est une vue en coupe schématique et partielle d'un autre mode de réalisation particulier de l'invention,
- les figures 9 et 10 sont des vues en perspective schématiques de guides optiques utilisables dans l'invention,
- la figure 11 illustre schématiquement diverses étapes d'un procédé de fabrication d'un exemple du dispositif de l'invention, et
- la figure 12 illustre schématiquement un couplage par réseau utilisable dans l'invention.

### EXPOSÉ DÉTAILLÉ DE MODES DE RÉALISATION PARTICULIERS

On sait qu'on peut atteindre des pertes d'insertion de l'ordre de 3 dB pour un état de polarisation donné, à partir d'un réseau de diffraction à une dimension ou réseau 1-D.

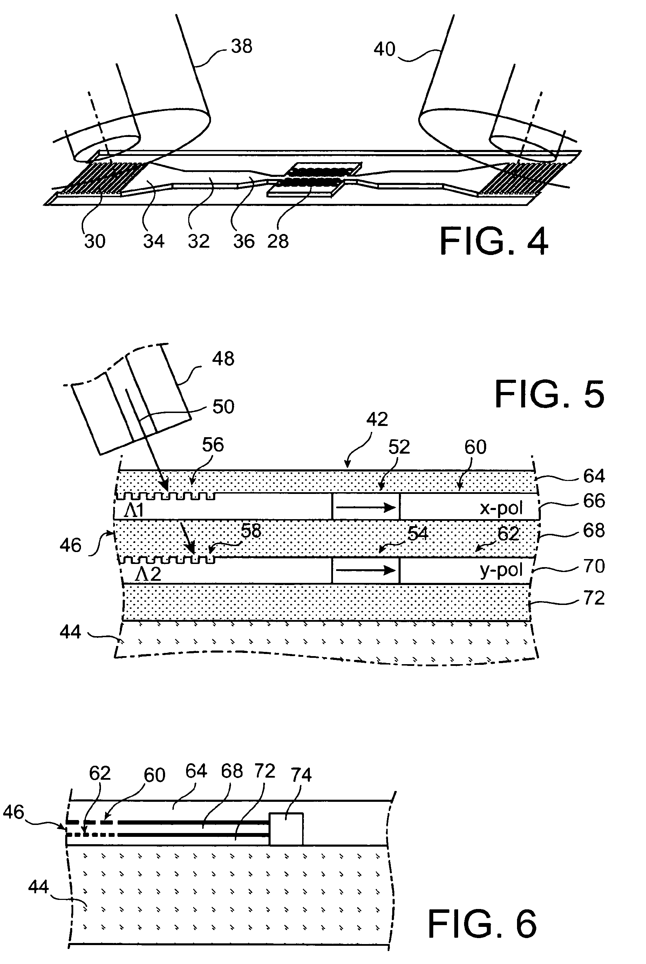

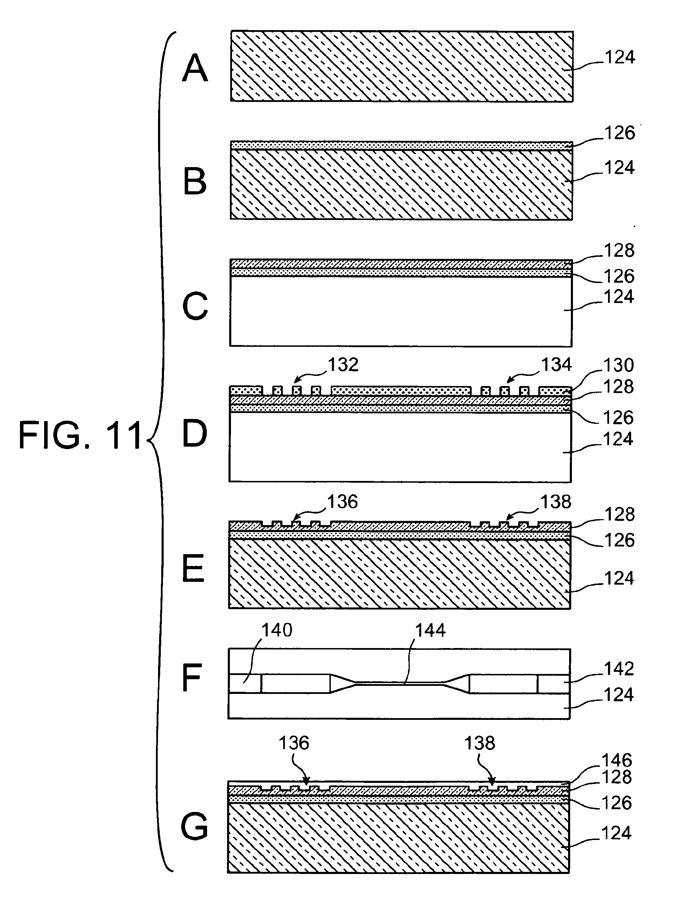

Ceci est le cas de la structure symétrique représentée sur la figure 4 qui correspond à la figure 11(a) du document [3]. Cette structure comprend un guide d'onde nanophotonique 28 dont chaque extrémité est reliée à un réseau 1-D 30 par l'intermédiaire d'un guide d'onde nervuré (en anglais, *ridge waveguide*) *32* et de raccords progressifs adiabatiques (en anglais, *adiabatic tapers*) 34 et 36, en vue de coupler des fibres optiques monomodes 38 et 40 à la structure, par l'intermédiaire des réseaux 1-D.

La figure 5 est une vue en coupe schématique d'un exemple de l'invention.

On y voit un dispositif optique 42 comprenant un substrat 44 et, sur ce substrat, un circuit photonique intégré 46 qui est adapté, d'une part, pour être optiquement couplé à une fibre optique 48, prévue pour transporter un signal lumineux 50 et, d'autre part, pour traiter le signal lumineux.

La fibre optique 48 peut être multimode mais elle est de préférence monomode.

Le circuit optique intégré 46 comprend deux circuits nanophotoniques 52 et 54 qui sont superposés : le circuit 54 est compris entre le circuit 52 et le substrat 44. Chacun de ces circuits nanophotoniques est adapté pour se coupler à un état de polarisation donné du signal lumineux et pour traiter cet état de polarisation donné.

Les deux états de polarisation du signal lumineux sont notés x-pol et y-pol et, dans l'exemple, le circuit supérieur 52 traite l'état x-pol, tandis que le circuit inférieur 54 traite l'état y-pol.

Dans l'exemple, chacun des circuits nanophotoniques 52 ou 54 comprend une partie 56 ou 58 de couplage à l'état de polarisation donné du signal lumineux 50 et une partie 60 ou 62 de traitement de l'état de polarisation x-pol ou y-pol ainsi couplé ; en outre, les parties de couplage respectives 56 et 58 des circuits 52 et 54 sont superposées ; et chaque partie de couplage 56 ou 58 est un réseau de diffraction à une dimension, comportant donc des lignes parallèles et périodiques (qui sont perpendiculaires au plan de la figure) ; la période ou pas (en anglais, *pitch*) du réseau 56 est notée Λ1 et celle du réseau 58 est notée A2.

Dans l'exemple, on utilise des réseaux nervurés de sorte que les lignes sont des nervures (en anglais, ridges), et les nervures du réseau 56 sont parallèles aux nervures du réseau 58. Une variante de cet exemple sera décrite plus loin.

Dans le dispositif de la figure 5, on exploite ainsi la forte sélectivité en polarisation d'un réseau 1-D qui couple un état de polarisation vers la partie de traitement, ou circuit de traitement, qui est associée à ce réseau, et laisse passer l'autre état de polarisation.

Dans l'exemple considéré, pour faire en sorte que le réseau 56 couple l'état x-pol et laisse passer l'état y-pol, on joue sur les propriétés des matériaux utilisés ou sur la géométrie du réseau, en modifiant par exemple le pas du réseau, le taux de remplissage (largeur des créneaux pleins par rapport à la largeur des créneaux vides), et/ou la profondeur de modulation (hauteur des créneaux).

De même, pour faire en sorte que le réseau 58 couple l'état y-pol et laisser passer l'état x-pol, on joue sur les propriétés des matériaux utilisés ou sur la géométrie du réseau, en modifiant par exemple le pas du réseau, le taux de remplissage (largeur des créneaux pleins par rapport à la largeur des créneaux vides), et/ou la profondeur de modulation (hauteur des créneaux).

On précise que le guide optique qui relie les parties 56 et 60 (respectivement 58 et 62) est pourvu d'un raccord progressif adiabatique du côté de la partie de couplage 56 (respectivement 58) pour se raccorder convenablement à celle-ci. Et, si cela est nécessaire, il comporte un autre raccord progressif adiabatique du côté du circuit 60 (respectivement 62) pour se raccorder convenablement à celui-ci.

A titre purement indicatif et nullement limitatif, le circuit 46 est formé dans un empilement constitué, en allant vers le substrat 44, d'une couche 64 de silice, d'une couche 66 de silice, d'une couche 68 de silice enterrée, d'une autre couche de silice 70 et d'une autre couche de silice enterrée 72 qui repose donc sur le substrat 44. Et, comme on le voit, les circuits nanophotoniques 52 et 54 sont respectivement formés dans les couches de silice 66 et 70, plus précisément dans des guides optiques formés dans ces couches 66 et 70.

Les guides optiques et les réseaux de couplage peuvent, bien sûr, avoir des géométries différentes afin d'être optimisés à l'état de polarisation privilégié.

Les guides optiques peuvent être de types différentes : par exemple, on peut avoir un guide optique nervuré (en anglais, *ridge waveguide*) et un guide optique à ruban (en anglais, *stripe waveguide)* ou deux guides optiques nervurés ou deux guides optiques à ruban.

Les technologies utilisées pour réaliser les circuits peuvent être identiques ou différentes, avec par exemple :
- du silicium monocristallin pour les circuits 52 et 54,
- ou du silicium amorphe pour ces circuits 52 et 54,
- ou du silicium monocristallin pour le circuit 52 et du silicium amorphe pour le circuit 54,
- ou du silicium amorphe pour le circuit 52 et du silicium monocristallin pour le circuit 54.

Le taux de couplage des réseaux peut être renforcé par différentes techniques : on peut par exemple ajouter une structure réfléchissante sous le réseau situé du côté du substrat, comme par exemple un miroir de Bragg ou réflecteur de Bragg (voir plus loin), un miroir métallique ou un cristal photonique.

Un photodétecteur, par exemple un photodétecteur en germanium, peut être prévu dans le circuit 46, à la suite des parties ou circuits de traitement 60 et 62, ce photodétecteur ayant une épaisseur suffisante pour capter la lumière issue de chacun de ces circuits 60 et 62.

Ceci est schématiquement illustré par la figure 6 où le photodétecteur a la référence 74.

Dans une variante non représentée de l'invention, le circuit 60 (respectivement 62) est prolongé par un réseau 1-D identique au réseau 56 (respectivement 58), ces réseaux supplémentaires sont superposés et l'on place une fibre optique en regard du réseau supplémentaire le plus éloigné du substrat, pour récupérer la lumière issue de chacun de ces réseaux supplémentaires.

La lumière ainsi récupérée est en fait la lumière qui était transportée par la fibre 50 et qui a été traitée par les circuits 60 et 62.

Dans une autre variante de l'invention, les réseaux 1-D sont formés de façon à être croisés. Les nervures du réseau 56 sont alors perpendiculaires aux nervures du réseau 58. Cela permet d'obtenir les mêmes états de polarisation dans les guides optiques qui prolongent les réseaux.

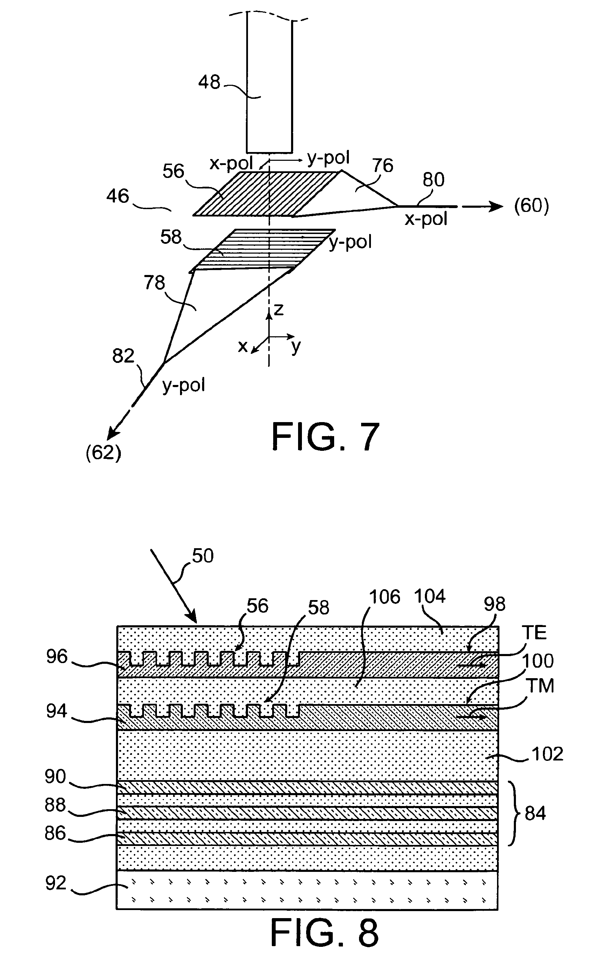

Ceci est schématiquement et partiellement illustré par la vue en perspective de la figure 7 où seuls des modes TE se propagent dans les circuits 60 et 62 du fait que les réseaux 56 et 58 sont croisés à 90°.

Dans cet exemple, l'axe de la fibre 48 est perpendiculaire au plan du circuit 46. On voit le raccord progressif adiabatique 76 ou 78 qui relie le réseau 56 ou 58 au guide optique 80 ou 82 menant au circuit de traitement 60 ou 62.

Des avantages particuliers apportés par l'invention sont les suivants :
- l'invention conduit à un bon taux de couplage entre le circuit 46 et la fibre 48 grâce à l'utilisation des réseaux 1-D 56 et 58,
- elle permet un traitement optimisé des deux états de polarisation de la lumière transportée par la fibre 48, et
- elle conduit à une réduction de l'encombrement du circuit optique destiné à traiter cette lumière.

Un exemple de conception du dispositif objet de l'invention est illustré sur la figure 8. Il comprend un réflecteur de Bragg 84 composé :
- de trois alternances de couches de silicium amorphe 86, 88, 90 qui sont déposées à la surface d'un substrat de silicium 92, et
- d'une couche de silicium 94 et d'une couche de silicium amorphe 96 qui sont chacune 200 nm d'épaisseur et sur lesquelles sont gravés les deux réseaux de couplage 1-D 56 et 58.

Il est à noter que la couche de silicium 94 peut être remplacée par une couche de silicium amorphe.

Le rôle du réflecteur de Bragg est de rediriger le faisceau transmis, qui est normalement perdu, vers les deux réseaux de couplage afin d'accroître l'efficacité de couplage. Les réseaux de diffraction 56 et 58, qui sont gravés dans les couches 96 et 94 respectivement faites de silicium amorphe et de silicium, permettent d'injecter les composantes TE et TM du faisceau lumineux incident 50 respectivement dans le guide optique de silicium amorphe 98 et dans le guide optique de silicium 100 qui suivent respectivement ces réseaux 56 et 58.

Sur la figure 8, on voit aussi :
- une couche de silice 102 qui est comprise entre le substrat 92 et la couche de silicium amorphe 94 et dans laquelle sont insérées les couches du réflecteur de Bragg 84,
- une couche de silice 104 qui sépare les couches 94 et 96, et
- une couche de silice 106 formée au-dessus de la couche 96.

L'optimisation du dispositif représenté sur la figure 8 consiste
- dans un premier temps, à déterminer les profondeurs de gravure et la période des réseaux de diffraction qui vont permettre d'injecter la lumière issue d'une fibre optique monomode dans ce dispositif, avec le même angle d'incidence pour chaque réseau, et
- par la suite, à déterminer les épaisseurs respectives des trois couches de silice 102, 104, 106 afin d'obtenir des efficacités de couplage qui soient identiques et les plus élevées possibles pour les deux polarisations TE et TM.

Le résultat de cette optimisation conduit à une structure possédant une efficacité de couplage de 62% pour les deux polarisations et pour un angle d'incidence de 21° lorsque les profondeurs de modulation des deux réseaux de diffraction sont de 0,1 µm, avec des périodes, ou pas, de 0,58 µm et de 0,76 µm respectivement pour le silicium amorphe et pour le silicium. Les épaisseurs des couches de silice 102, 104 et 106 valent respectivement de 1,15 µm, 1,15 µm et 0,4 µm.

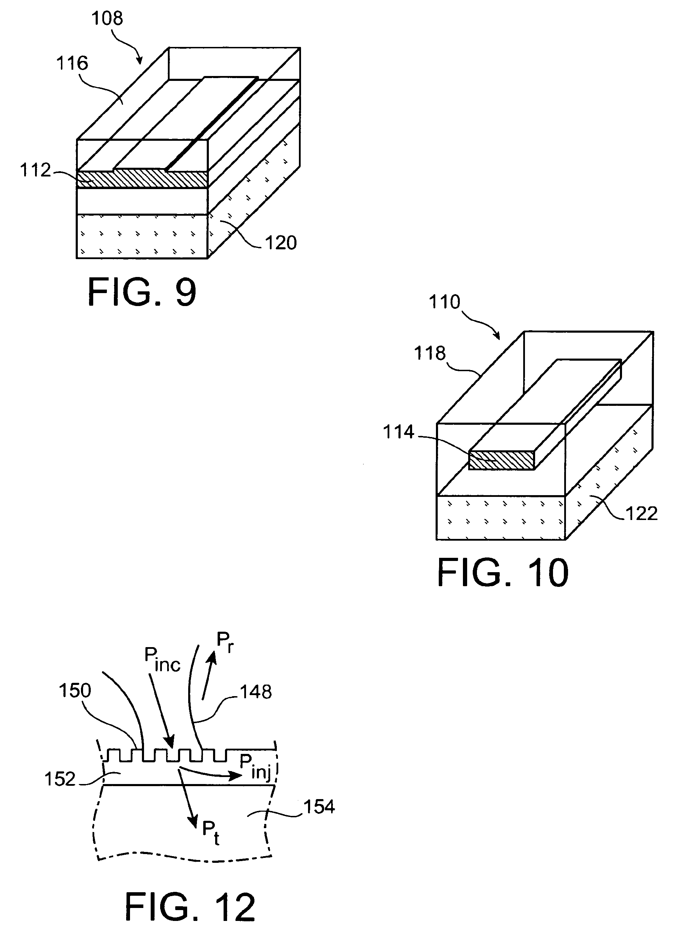

Les figures 9 et 10 sont des vues schématiques en perspective d'exemples de guides optiques utilisables dans l'invention.

Sur la figure 9, on voit un guide optique à nervure 108 et, sur la figure 10, un guide optique à ruban 110. Le guide optique 108 ou 110 comprend un coeur (en anglais, core) en silicium 112 ou 114 dans une gaine (en anglais, *cladding*) en silice 116 ou 118 et repose sur un substrat 120 ou 122.

Le coeur en silicium du guide optique à nervure est partiellement gravé latéralement et les dimensions du mode de ce guide optique valent typiquement 0,5 µm x 0,2 µm. Le coeur en silicium du guide optique à ruban est, quant à lui, totalement gravé latéralement et les dimensions du mode de ce guide optique valent typiquement 0,9 µm x 0,4 µm.

Au lieu d'être en silicium, ces guides optiques peuvent être par exemple en InP ou en silice dopée avec du phosphore, du bore ou du germanium.

Les parties A à G de la figure 11 illustrent schématiquement un exemple d'une séquence d'étapes A) à G) permettant de former un dispositif conforme à l'invention, comportant des guides de type ruban et des réseaux de couplage, par des procédés microélectroniques de dépôt/photolithographie/gravure.
A) On part d'un substrat 124 en silicium massif (en anglais, bulk) (vu de côté en coupe).
B) On dépose une couche 126 de silice d'une épaisseur supérieure à 1,2 µm, à partir de TEOS, c'est-à-dire de tétraéthoxysilane, pour éviter les pertes dans le substrat.
C) On dépose une couche de silicium 128 sur la couche 126, par PECVD, pour y former le guide optique et les réseaux.
D) On procède à une lithographie dans l'ultraviolet profond (DUV), à 248 nm, dans une couche de résine de photolithographie 130 formée sur la couche 128 pour former des réseaux intermédiaires 132 et 134 dans la couche 130.
E) On procède à une gravure partielle de la couche de silicium 128 pour y former les réseaux correspondants 136 et 138 du dispositif.
F) On procède à une lithographie dans l'ultraviolet profond (DUV), à 248 nm, pour former des guides optiques 140 et 142, qui sont nécessaires au dispositif (vu de dessus), puis à une gravure totale du silicium jusqu'à la silice pour former des guides rubans tels que le guide ruban 144.
G) On procède à un dépôt de silice d'encapsulation 146 à partir de TEOS.

Pour former deux circuits empilés, il suffit de poursuivre par une étape de planarisation mécanochimique de la silice d'encapsulation, ajustée en épaisseur, et de reproduire la séquence de fabrication en commençant par le dépôt de silicium amorphe.

Comme on l'a vu, les structures de couplage utilisées dans l'invention sont typiquement des réseaux de diffraction 1-D. En effet, il est bien connu qu'une structure périodique de type réseau permet de coupler une partie de la lumière incidente (perpendiculaire ou inclinée) dans un guide optique placé dans le même plan que le réseau. L'autre partie de la lumière, qui n'est pas couplée dans le guide, est simplement transmise par le réseau.

Typiquement, le taux de couplage dans le guide optique est d'environ 50% à 80%.

La figure 12 illustre schématiquement un exemple de couplage d'un faisceau lumineux 148 avec un réseau 1-D 150 formé dans un guide optique 152, lui-même formé sur un substrat 154.

Les références Pinc, Pinj, Pt et Pr représentent respectivement la puissance lumineuse du faisceau incident, la puissance lumineuse injectée dans le réseau, la puissance lumineuse transmise par ce dernier et la puissance lumineuse réfléchie par lui.

D'autres structures de couplage sont utilisables dans l'invention. Par exemple, on peut envisager les réseaux suivants :
- les réseaux dont les motifs sont courbes et non pas droits,
- les réseaux dont le pas est variable d'un motif à l'autre,
- les cristaux photoniques dont les motifs sont des petits trous, et non plus des bandes, et
- les optiques diffractives dont les motifs sont proches de la longueur d'onde : entre 10 fois plus et dix fois moins que la longueur d'onde.

En outre, au lieu de coupler optiquement le circuit photonique intégré d'un dispositif conforme à l'invention à un seul guide optique, par exemple une seule fibre optique, il est possible de le coupler à plusieurs guides optiques, par exemple plusieurs fibres optiques.

## Revendications

1. Dispositif optique (42) comprenant un substrat (44) et, sur ce substrat, un circuit photonique intégré (46) qui est adapté, d'une part, pour être optiquement couplé à au moins un guide optique (48), en particulier une fibre optique, prévu pour transporter un signal lumineux (50) et, d'autre part, pour traiter le signal lumineux, dans lequel le circuit photonique intégré comprend des premier et deuxième circuits photoniques intégrés élémentaires (52, 54) qui sont superposés, les premier et deuxième circuits photoniques intégrés élémentaires étant adaptés pour se coupler respectivement à des premier et deuxième états de polarisation donnés du signal lumineux et pour traiter respectivement ces premier et deuxième états de polarisation donnés, **caractérisé en ce que** chacun des premier et deuxième circuits photoniques intégrés élémentaires comprend une partie de couplage, adaptée au couplage au guide optique, et les parties de couplage respectives (56, 58) des premier et deuxième circuits photoniques intégrés élémentaires sont superposées.

2. Dispositif optique selon la revendication 1, dans lequel le deuxième circuit photonique intégré élémentaire (54) est compris entre le substrat et le premier circuit photonique intégré élémentaire (52), le premier circuit photonique intégré élémentaire étant destiné à recevoir le signal lumineux et adapté pour se coupler au premier état de polarisation du signal lumineux, le deuxième circuit photonique intégré élémentaire étant adapté pour se coupler au deuxième état de polarisation du signal lumineux.

3. Dispositif optique selon l'une quelconque des revendications 1 et 2, dans lequel les premier et deuxième circuits photoniques intégrés élémentaires sont des circuits nanophotoniques (52, 54).

4. Dispositif optique selon l'une quelconque des revendications 1 à 3, dans lequel la partie de couplage de chacun des premier et deuxième circuits photoniques intégrés élémentaires (52, 54) est adaptée au couplage à l'état de polarisation donné correspondant du signal lumineux, et chacun des premier et deuxième circuits photoniques intégrés élémentaires comprend en outre une partie (60, 62) de traitement de l'état de polarisation donné du signal lumineux ainsi couplé.

5. Dispositif optique selon les revendications 2 et 4, dans lequel la partie de couplage (56) du premier circuit photonique intégré élémentaire (52) est adaptée pour se coupler au premier état de polarisation du signal lumineux, et la partie de couplage (58) du deuxième circuit photonique intégré élémentaire (54) est adaptée pour se coupler au deuxième état de polarisation du signal lumineux.

6. Dispositif optique selon l'une quelconque des revendications 4 et 5, dans lequel chaque partie de couplage comprend un réseau de diffraction à une dimension (56, 58).

7. Dispositif optique selon la revendication 6, dans lequel chacun des réseaux de diffraction à une dimension (56, 58) comporte des lignes parallèles et les lignes de l'un des réseaux de diffraction à une dimension sont parallèles aux lignes de l'autre réseau de diffraction à une dimension.

8. Dispositif optique selon la revendication 6, dans lequel chacun des réseaux de diffraction à une dimension (56, 58) comporte des lignes parallèles et les lignes de l'un des réseaux de diffraction à une dimension sont perpendiculaires aux lignes de l'autre réseau de diffraction à une dimension.

9. Dispositif optique selon l'une quelconque des revendications 4 et 5, dans lequel chaque partie de couplage comprend un réseau de diffraction choisi parmi les réseaux à motifs courbes, les réseaux à pas variable d'un motif à l'autre, les réseaux photoniques et les optiques diffractives.

10. Dispositif optique selon l'une quelconque des revendications 4 à 9, comprenant en outre une structure réfléchissant la lumière (84), placée en dessous de l'ensemble des parties de couplage superposées (56, 58).

11. Dispositif optique selon l'une quelconque des revendications 1 à 10, comprenant en outre un photodétecteur (74) adapté pour détecter les premier et deuxième états de polarisation qui sont respectivement traités par les premier et deuxième circuits photoniques intégrés élémentaires (52, 54).

## Patentansprüche

1. Optische Vorrichtung (42), welche ein Substrat (44) und auf diesem Substrat eine integrierte Photonenschaltung (46) umfasst, die einerseits optisch mit wenigstens einem zur Übertragung eines Lichtsignals vorgesehenen optischen Wellenleiter (48), insbesondere mit einer optischen Faser, optisch koppelbar ist und andererseits zur Verarbeitung des Lichtsignals ausgebildet ist, wobei die integrierte Photonenschaltung elementare integrierte erste und zweite Photonenschaltungen (52, 54) umfasst, die übereinander angeordnet sind, und wobei die elementaren integrierten ersten und zweiten Photonenschaltungen so ausgebildet sind, dass sie mit gegebenen ersten bzw. zweiten Polarisationszuständen des Lichtsignals koppeln und jeweils diese ersten bzw, zweiten Polarisationszustände behandeln können,
**dadurch gekennzeichnet, dass** jede der elementaren integrierten ersten bzw. zweiten Photonenschaltungen einen zur Kopplung mit dem optischen Wellenleiter angepassten Kopplungsteil umfasst, und dass die jeweiligen Kopplungsteile (56, 58) der elementa- ren integrierten ersten und zweiten Photonenschaltungen überlagert bzw. übereinander angeordnet sind.

2. Optische Vorrichtung nach Anspruch 1, bei welcher die elementare integrierte zweite Photonenschaltung (54) zwischen dem Substrat und der ersten elementaren integrierten Photonenschaltung (52) angeordnet ist, und bei welcher die elementare integrierte erste Photonenschaltung zum Empfang des Lichtsignals vorgesehen und so ausgebildet ist, dass sie mit dem ersten Polarisationszustand des Lichtsignals koppelt, während die zweite elementare integrierte Photonenschaltung so ausgebildet ist, dass sie mit dem zweiten Polarisationszustand des Lichtsignals koppelt.

3. Optische Vorrichtung nach einem beliebigen der Ansprüche 1 und 2, bei welcher die elementaren integrierten ersten und zweiten Photonenschaltungen Nano-Photonenschaltungen (52, 54) sind.

4. Optische Vorrichtung nach einem beliebigen der Ansprüche 1 bis 3, bei welcher der Kopplungsteil jedes der elementaren integrierten ersten und zweiten Photonenschaltungen (52, 54) zur Kopplung mit dem entsprechenden gegebenen Polarisationszustand des Lichtsignals ausgebildet ist und jede der elementaren integrierten ersten und zweiten Photonenschaltungen des Weiteren einen Teil zur Behandlung des gegebenen Polarisationszustands des so gekoppelten Lichtsignals umfasst.

5. Optische Vorrichtung nach den Ansprüchen 2 und 4, bei welcher der Kopplungsteil (56) der elementaren integrierten ersten Photonenschaltung (52) zur Kopplung mit dem ersten Polarisationszustand des Lichtsignals ausgebildet ist und der Kopplungsteil (58) der elementaren integrierten zweiten Photonenschaltung (54) zur Kopplung mit dem zweiten Polarisationszustand des Lichtsignals ausgebildet ist.

6. Optische Vorrichtung nach einem beliebigen der Ansprüche 4 und 5, bei welcher jeder Kopplungsteil jeweils ein Beugungsgitter mit einer Dimension (56, 58) aufweist.

7. Optische Vorrichtung nach Anspruch 6, bei welcher jeweils jedes eindimensionale Beugungsgitter (56, 58) parallele Linien aufweist und die Linien eines der eindimensionalen Beugungsgitter parallel zu den Linien des anderen eindimensionalen Beugungsgitters sind.

8. Optische Vorrichtung nach Anspruch 6, bei welcher jeweils jedes eindimensionale Beugungsgitter (56, 58) parallele Linien aufweist und die Linien des einen der eindimensionalen Beugungsgitter rechtwinklig zu den Linien des anderen eindimensionalen Beugungsgitters sind.

9. Optische Vorrichtung nach einem beliebigen der Ansprüche 4 und 5, bei welcher jeweils jeder Kopplungsteil ein Beugungsgitter umfasst, das aus Gittern mit gekrümmten Linienmotiven, den Gittern mit von einem Motiv zum anderen Motiv variablen Gang bzw. Konstante sowie den Photonengittern und den Beugungsoptiken gewährt ist.

10. Optische Vorrichtung nach einem beliebigen der Ansprüche 4 bis 9, welche des Weiteren ein das Licht reflektierendes Gebilde (84) in Anordnung unterhalb dem Aggregat der übereinander angeordneten Kopplungsteile (56, 58) umfasst.

11. Optische Vorrichtung nach einem beliebigen der Ansprüche 1 bis 10, die des Weiteren einen Photodetektor (74) zur Detektion des ersten und zweiten Polarisationszustands umfasst, die jeweils durch die jeweiligen elementaren integrierten ersten und zweiten Photonenschaltungen verarbeitet werden.

## Claims

1. Optical device (42) comprising a substrate (44) and, on said substrate, an integrated photonic circuit (46) adapted, on the one hand, to be optically coupled to at least one optical waveguide (48), in particular an optical fibre, provided to transmit a light signal (50) and, on the other hand, to process the light signal, wherein the integrated photonic circuit comprises first and second elementary integrated photonic circuits (52, 54) which are superimposed, the first and second elementary integrated photonic circuits being adapted to be respectively coupled to given first and second polarisation states of the light signal and to respectively process said given first and second polarisation states, **characterized in that** each of the first and second elementary integrated photonic circuits comprises a coupling part, adapted for coupling to the optical waveguide, and the respective coupling parts (56, 58) of the first and second elementary integrated photonic circuits are superimposed.

2. Optical device according to claim 1, wherein the second elementary integrated photonic circuit (54) is between the substrate and the first elementary integrated photonic circuit (52), the first elementary integrated photonic circuit being intended to receive the light signal and adapted to be coupled to the first polarisation state of the light signal, the second elementary integrated photonic circuit being adapted to be coupled to the second polarisation state of the light signal.

3. Optical device according to any of claims 1 and 2, wherein the first and second elementary integrated photonic circuits are nanophotonic circuits (52, 54).

4. Optical device according to any of claims 1 to 3, wherein the coupling part of each of the first and second elementary integrated photonic circuits (52, 54) is adapted for coupling to the given corresponding polarisation state of the light signal and further comprising a part (60, 62) for processing the given polarisation state of the light signal thus coupled.

5. Optical device according to claims 2 and 4, wherein the coupling part (56) of the first elementary integrated photonic circuit (52) is adapted to be coupled to the first polarisation state of the light signal, and the coupling part (58) of the second elementary integrated photonic circuit (54) is adapted to be coupled to the second polarisation state of the light signal.

6. Optical device according to any of claims 4 and 5, wherein each coupling part includes a one dimensional diffraction grating (56, 58).

7. Optical device according to claim 6, wherein each of the one dimensional diffraction gratings (56, 58) comprises parallel lines and the lines of one of the one dimensional diffraction gratings are parallel to the lines of the other one dimensional diffraction grating.

8. Optical device according to claim 6, wherein each of the one dimensional diffraction gratings (56, 58) comprises parallel lines and the lines of one of the one dimensional diffraction gratings are perpendicular to the lines of the other one dimensional diffraction grating.

9. Optical device according to any of claims 4 and 5, wherein each coupling part includes a diffraction grating chosen among gratings with curved patterns, gratings with variable pitch from one pattern to the next, photonic gratings and diffractive optics.

10. Optical device according to any of claims 4 to 9, further comprising a light reflecting structure (84), placed below the set of superimposed coupling parts (56, 58).

11. Optical device according to any of claims 1 to 10, further comprising a photodetector (74) adapted to detect the first and second polarisation states which are respectively processed by the first and second elementary integrated photonic circuits (52, 54).
